**Europäisches Patentamt**

**European Patent Office**

**Office européen des brevets**

(19)

(11) Veröffentlichungsnummer: **0 256 143**

**A1**

(12) **EUROPÄISCHE PATENTANMELDUNG**

Veröffentlicht nach Art. 158 Abs. 3 EPÜ

(21) Anmeldenummer: 87901772.1

(22) Anmeldetag: 05.02.87

Daten der zugrundeliegenden internationalen Anmeldung:

(86) Internationale Anmeldenummer:
PCT/SU87/00020

(87) Internationale Veröffentlichungsnummer:
WO87/04842 (13.08.87 87/18)

(51) Int. Cl.³: **G 11 B 7/00**

(30) Priorität: 07.02.86 SU 3134138

(43) Veröffentlichungstag der Anmeldung:
24.02.88 Patentblatt 88/8

(84) Benannte Vertragsstaaten:
AT BE CH DE FR GB IT LI LU NL SE

(71) Anmelder: INSTITUT PROBLEM MODELIROVANIA V
ENERGETIKE AKADEMII NAUK UKRAINSKOI SSR
pr. Pobedy, 56
Kiev, 252680(SU)

(72) Erfinder: PETROV, Vyacheslav Vasilievich
ul. Montazhnikov, 104
Kiev, 252069(SU)

(72) Erfinder: GORSHKOV, Nikolai Vasilievich
Leninsky pr., 52-416
Moscow, 117333(SU)

(72) Erfinder: ANTONOV, Alexandr Alexandrovich
pr. Vernadskogo, 85-64
Kiev, 252142(SU)

(72) Erfinder: TOKAR, Alexandr Petrovich
pr. Korneichuka, 30-161
Kiev, 252205(SU)

(72) Erfinder: KRJUCHIN, Andrei Andreevich
ul. Juliusa Fuchika, 8-13
Kiev, 252049(SU)

(72) Erfinder: SHANOILO, Semen Mikhailovich
ul. A. Malyshko, 15-27
Kiev, 252206(SU)

(74) Vertreter: Lehn, Werner, Dipl.-Ing. et al,
Hoffmann, Eitle & Partner Patentanwälte Arabellastrasse 4
D-8000 München 81(DE)

(54) **VERFAHREN ZUM AUSRADIEREN VON INFORMATIONEN.**

(57) Verfahren zur Löschung einer auf einem optischen Informationsträger aufgezeichneten Information besteht darin, dass ein optischer Informationsträger genommen, der einen hermetisch abgedichteten Hohlraum mit einer Aufzeichnungsschicht auf seiner Innenfläche aufweist, der hermetisch abgedichtete Hohlraum mit einem gegenüber dem Material der Aufzeichnungsschicht und dem Material des Trägers inerten Gas unter einem in einem Bereich von 10 bis $10^3$ kPa gewählten Druck gefüllt und der Träger einer äusseren Einwirkung durch dessen Erhitzung unterzogen wird, worauf nach Abschluss der Erhitzung eine Aufzeichnungsschicht wieder erzeugt wird.

# VERFAHREN ZUR LÖSCHUNG EINER INFORMATION

## Gebiet der Technik

Die Erfindung bezieht sich auf Mittel zur Informationsspeicherung und -verarbeitung und betrifft insbesondere Informationslöschverfahren.

## Stand der Technik

Es ist ein Informationslöschverfahren für optische Speicher bekannt, darin bestehend, dass Abschnitte des optischen Informationsträgers, auf denen eine Information aufgezeichnet ist, mit einem Lichtstrahl in der Weise belichtet werden, um sie in den Zustand mit ursprünglichen optischen Eigenschaften rückzuverwandeln. Hierbei bewirkt die Belichtung des Trägers eine Änderung des Kristallisationsgrades der Aufzeichnungsschicht des Informationsträgers (s. FR, B, 2482756).

Das Löschverfahren nimmt wegen der Notwendigkeit, den Träger langsam zu erhitzen und dann die vorgegebene Temperatur genau einzuhalten, viel Zeit in Anspruch. Deshalb ist das Verfahren wenig produktiv und sichert die erforderliche Zuverlässigkeit einer wiederholten Aufzeichnung nicht, weil sich bei der Wiederholung der Aufzeichnung und bei der Löschung die Struktur der Aufzeichnungsschicht verschlechtert und deren Dicke ungleichmässig werden. Dies verringert die Zykluszahl bei der Umschreibung sprunghaft.

Es ist auch ein Verfahren zur Löschung einer auf einem eine Aufzeichnungsschicht aufweisenden optischen Träger aufgezeichneten Information bekannt, darin bestehend, dass der Träger einer äusseren Einwirkung, beispielsweise einer Erhitzung, unterzogen wird, die die aufgezeichnete Information löscht. Zu diesem Zweck werden zwei oder mehr Lichtstrahlen generiert, auf den Träger fokussiert und längs der Aufzeichnungsschicht des Informationsträgers in der Weise geführt, dass die Abschnitte dieser Schicht mit unterschiedlichem Grad erwärmt werden. Dies wird durch Änderung der Strahlungsenergiedichte mit Hilfe einer Änderung der Strahlungsintensität oder der Fleckgrösse

-2-

(s. US, A, 4403318) erreicht.

Dieses Verfahren gewährleistet aber keine mehrfache Benutzung des optischen Informationsträgers aus den gleichen Gründen, die oben aufgezählt worden sind.

Offenbarung der Erfindung

Der Erfindung liegt die Aufgabe zugrunde, ein derartiges Informationslöschverfahren zu schaffen, das es gestattet, nach der Löschung eine wiederholte Aufzeichnung auf demselben optischen Informationsträger mehrmals vorzunehmen.

Diese Aufgabe wird dadurch gelöst, dass in dem Verfahren zur Löschung einer auf einem eine Aufzeichnungsschicht aufweisenden optischen Informationsträger aufgezeichneten Information, darin bestehend, dass der optische Informationsträger einer äusseren Einwirkung durch dessen Erhitzung unterzogen wird, gemäss der Erfindung ein optischer Informationsträger genommen, der einen hermetisch abgedichteten Hohlraum aufweist, auf dessen Innenfläche eine Aufzeichnungsschicht aufgetragen ist, der hermetisch abgedichtete Hohlraum mit einem gegen das Material der Aufzeichnungsschicht und das Material des optischen Informationsträgers inerten Gas unter einem in einem Bereich von IO bis IO$^3$ kPa gewählten Druck gefüllt und nach Abschluss der Erhitzung eine Aufzeichnungsschicht wieder erzeugt wird.

Derartiges Informationslöschverfahren gestattet es, den gleichen optischen Träger unter gleichzeitiger Vergrösserung seiner mechanischen Festigkeit mehrfach zu verwenden.

Um die Dicke der Aufzeichnungsschicht im Vorgang der Informationsumschreibung bei der Herstellung des hermetisch abgedichteten Hohlraumes in Form eines Zylinders konstant zu halten, in dem die Aufzeichnungsschicht auf die Mantelfläche aufgebracht ist, kann im hermetisch abgedichteten Hohlraum eine zusätzliche Menge Material untergebracht werden, die für die Aufzeichnungsschicht ausgenutzt wird.

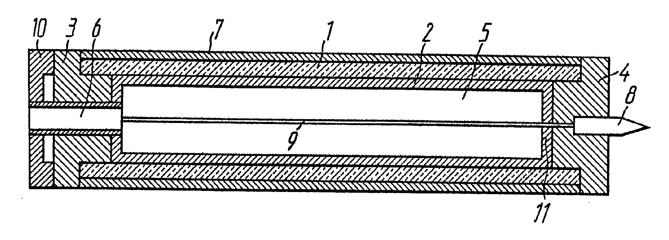

Kurze Beschreibung der Zeichnung

Die Erfindung soll durch die nachstehende Beschreibung eines Ausführungsbeispiels anhand einer beiliegenden Zeichnung näher erläutert werden, in der ein optischer Informationsträger dargestellt ist, durch dessen Verwendung das erfindungsgemässe Informationslöschverfahren verwirklicht wird.

Bevorzugte Ausführungsform der Erfindung

Das erfindungsgemässe Verfahren zur Löschung einer auf einem optischen Träger aufgezeichneten Information kann auf einem Informationsträger vorgenommen werden, der eine spezielle Konstruktion aufweist, deren eine Variante in der beigelegten Zeichnung aufgeführt ist.

Der optische Informationsträger enthält ein Substrat, das im vorliegenden Beispiel in Form eines Zylinders I aus einem für die Strahlung eines (in der Zeichnung nicht angedeuteten) Lasers durchsichtigen Material, beispielsweise aus Glas, hergestellt ist. Das vorliegende Verfahren kann aber auch auf einem Träger realisiert werden, der ein Substrat beispielsweise aus zwei einander gegenüberliegenden gleichachsigen Scheiben oder einer anderen ähnlichen Konstruktion besitzt.

Der Zylinder I ist hohl ausgeführt, und auf seiner inneren Mantelfläche liegt eine Aufzeichnungsschicht 2 in Form einer Dünnschicht beispielsweise aus Te oder Bi. An den Stirnenden des Zylinders I sind hermetisierende Hülsen 3 und 4 vorhanden, die einen hermetisch abgeschlossenen Hohlraum 5 innerhalb des Zylinders bilden, während die Aufzeichnungsschicht 2 innerhalb dieses Hohlraumes 5 liegt. In der Hülse 3 ist ein Rohr 6 zur Luftabsaugung aus dem hermetisch abgedichteten Hohlraum und zu dessen anschliessender Füllung mit einem gegen das Material der Aufzeichnungsschicht 2 und das Material des Zylinders I, d.h. gegen Tellur oder Wismut sowie gegen Glas gleichzeitig, inerten Gas angeordnet. Als solch ein Gas kommt Stickstoff oder Argon in Betracht.

-4-

Der Gasdruck im hermetisch abgedichteten Hohlraum 5 wird in einem Bereich von $10$ bis $10^3$ kPa gewählt. Der Gasdruck von unterhalb $10$ kPa führt zu einer zu hohen Geschwindigkeit des Überganges des Materials der Aufzeichnungsschicht aus der Gas- in die Flüssigphase, bei der sich die Gleichmässigkeit der Dicke der regenerierten Aufzeichnungsschicht verschlechtert, während der Gasdruck von oberhalb $10^3$ kPa die Regenerierungsgeschwindigkeit der Aufzeichnungsschicht in solch einem Grad verringert, dass die Leistungsfähigkeit des Vorganges abfällt.

Am günstigsten ist der Gasdruck im Hohlraum 5 von der Grösse ca. $10^5$ Pa, der dem Atmosphärendruck nahe liegt.

Für den betrachteten Träger kann also als Überdruck sowohl der Aussen- als auch der Innendruck sein. In diesem Fall ist die zylindrische Form des Informationsträgers am vorteilhaftesten, weil sie bei einer minimalen Wanddicke des Substrats des Trägers einem Überdruck beliebiger Richtung in bester Weise standhält, während das Vorhandensein des Gases im Hohlraum 5 es gestattet, den Überdruck auf den akzeptabelsten Wert zu verringern. Derartiger Informationsträger besitzt daher eine hohe Festigkeit.

Auf der Aussenfläche des Zylinders I liegt eine Leitschicht 7, die für die Laserstrahlung durchsichtig und mit einem axialen Anschlag 8 elektrisch verbunden ist. Im Hohlraum 5 ist eine Elektrode 9 angeordnet, die mit einem Deckel IO aus leitendem Material elektrisch gekoppelt ist.

Die Informationsaufzeichnung auf solch einem Träger wird in einem beliebigen bekannten Verfahren mit Hilfe eines fokussierten Strahls durchgeführt, der mit dem aufzeichnenden Signal nach der Intensität, Fleckform und -grösse durchmoduliert ist, oder in einem anderen bekannten Verfahren durchgeführt. Hierbei wird der Träger durch einen beliebigen (in der Zeichnung nicht gezeigten) Antrieb um seine geometrische Achse gedreht. Auf der Oberfläche der Aufzeichnungsschicht 2 treten entsprechende Änderungen des Reliefs auf.

Die voreingeschriebene Information wird wie folgt gelöscht.

Der Informationsträger wird einer äusseren Einwirkung ausgesetzt, beispielsweise in einer beliebigen bekannten Weise erhitzt. Hierbei verdampft das Material der Schicht 2 praktisch restlos. Dann wird die Erhitzung eingestellt und eine Aufzeichnungsschicht wieder erzeugt, wozu man den Informationsträger sich abkühlen lässt. Hierbei beginnt das im Innenraum des Informationsträgers im gasförmigen Zustand befindliche Material der Aufzeichnungsschicht 2 an dessen abgekühlten Wänden allmählich zuerst in einen flüssigen und dann in einen festen Zustand überzugehen. Das Vorhandensein des gegenüber den Materialien des Substrats und der Aufzeichnungsschicht 2 inerten Gases im Innenraum des Informationsträgers verlangsamt die Geschwindigkeit dieses Vorganges beträchtlich. Der Vorgang der Tropfenbildung kann daher selbst für Materialien der Aufzeichnungsschicht 2 mit einer grossen Oberflächenenergie praktisch total unterdrückt werden, wodurch eine hohe Gleichmässigkeit der regenerierten Aufzeichnungsschicht 2 und also auch eine hohe Qualität der wiederholten Aufzeichnungen gewährleistet wird. Die Vergrösserung der Zykluszahl der Informationsumschreibung wird bei der angemeldeten Einrichtung auch durch Ausnutzung einer erniedrigten Leistung der Laserstrahlung zur Informationsaufzeichnung erreicht, weil es vertretbar ist, für die Aufzeichnungsschicht 2 ein Material mit recht hohen Oberflächenenergiepegeln zu verwenden, was dessen Destruktion wesentlich verringert.

Zur Regelung der Regenerierungsgeschwindigkeit der Aufzeichnungsschicht 2 wird an den optischen Träger nach Beendigung der Erwärmung ein elektrisches Feld angelegt, weshalb auf die Elektrode 9 und die Leitschicht 7 eine Potentialdifferenz gegeben wird, die die Absetzgeschwindigkeit von Ionen des Aufzeichnungsmaterials hemmt. Der Ionisationsgrad der Dämpfe des Materials der Aufzeichnungsschicht 2 wird bei einem unzureichenden Einfluss der natürlichen Faktoren durch eine zusätzliche Strahlungswirkung oder durch irgendeine andere Einwirkung auf das

-6-

Substrat in Form des Zylinders I verstärkt. Die geschwindigkeit der Absetzung der Aufzeichnungsschicht 2 auf der inneren Mantelfläche des Zylinders I wird also in der angemeldeten Einrichtung durch eine richtige Wahl eines Bremspotentials sowie durch das Vorhandensein eines Gases im Hohlraum 5 des Informationsträgers, das die freie Weglänge von Materialteilchen der Aufzeichnungsschicht 2 sprungshaft verringert, so niedrig gehalten, dass sich in der flüssigen Phase ein vernachlässigbar kleiner Teil des Materials der Schicht 2 befindet.

Damit die Dicke der Aufzeichnungsschicht 2 bei mehrfachen Wiederholungen des Vorganges der Informationsumschreibung durch Abscheidung ihres Materials an den Stirnwänden des Hohlraumes 5 nicht abnimmt, wird in den Hohlraum 5 eine zusätzliche Menge Material der Schicht 2 eingebracht. Dies wird beispielsweise durch Auftragen einer Schicht II aus dem gleichen Material, aus dem die Schicht 2 hergestellt ist, auf die Stirnwände des Hohlraumes 5 verwirklicht.

Die Anwendung des betrachteten Informationslöschverfahrens gestattet es, die Zykluszahl der Informationsumschreibung bei gleichzeitiger Erhöhung der Zuverlässigkeit der Informationsaufzeichnung und -ablesung wesentlich zu erhöhen, da die Beschädigungen und die Verschmutzung der im Innenraum des Informationsträgers befindlichen Aufzeichnungsschicht ausgeschlossen sind. Bei Benutzung des zylindrischen Informationsträgers wird auch die Sicherheit der Informationsspeicherung infolge einer Vergrösserung seiner mechanischen Festigkeit gesteigert.

Gewerbliche Anwendbarkeit

Die Erfindung kann in der Rechentechnik, in Bild- und Schallaufzeichnungsgeräten und in Systemen zur Informationsspeicherung und -verarbeitung, insbesondere in externen Speichern von EDVA, Anwendung finden.

-7-

PATENTANSPRUCHE

I. Verfahren zur Löschung einer auf einem eine Aufzeichnungsschicht (2) aufweisenden optischen Informationsträger aufgezeichneten Information, darin bestehend, dass der optische Informationsträger einer äusseren Einwirkung durch dessen Erhitzung unterzogen wird, dadurch g e k e n n z e i c h n e t, dass ein optischer Informationsträger genommen, der einen hermetisch abgedichteten Hohlraum (5) aufweist, auf dessen Innenfläche eine Aufzeichnungsschicht (2) aufgetragen ist, der hermetisch abgedichtete Hohlraum (5) mit einem gegen das Material der Aufzeichnungsschicht (2) und das Material des optischen Informationsträgers inerten Gas unter einem in einem Bereich von IO bis IO$^3$ kPa gewählten Druck gefüllt und nach Abschluss der Erhitzung eine Aufzeichnungsschicht (2) wieder erzeugt wird.

2. Verfahren nach Anspruch I, dadurch g e k e n n z e i c h n e t, dass bei der Ausführung des hermetisch abgedichteten Hohlraumes (5) in Form eines Zylinders, in dem die Aufzeichnungsschicht (2) auf dessen Mantelfläche aufgebracht ist, im hermetisch abgedichteten Hohlraum (5) eine zusätzliche Menge Material untergebracht wird, die für die Aufzeichnungsschicht ausgenutzt wird, um die Dikke der Aufzeichnungsschicht (2) im Vorgang der Informationsumschreibung konstant zu halten.

# INTERNATIONAL SEARCH REPORT

International Application No PCT/SU 82/56043

## I. CLASSIFICATION OF SUBJECT MATTER (If several classification symbols apply, indicate all) *

According to International Patent Classification (IPC) or to both National Classification and IPC

IPC$^4$ - G 11 B 7/00

## II. FIELDS SEARCHED

### Minimum Documentation Searched 7

| Classification System | Classification Symbols |
|---|---|
| IPC$^4$ | G 11 B 7/00,7/24 |

Documentation Searched other than Minimum Documentation
to the Extent that such Documents are Included in the Fields Searched *

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | DE, A1, 3203599, (Tokyo Shibaura Denki K.K.) 12 August 1982 (12.08.82) see figure 1, page 6 | 1-2 |
| A | US, A, 4403318, (Matsushita Electric Industrial Co., Ltd.) 06 September 1983 (06.09.83), see the abstract | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 04 May 1987 (04.05.87) | 20 May 1987 (20.05.87) |

| International Searching Authority | Signature of Authorized Officer |
|---|---|
| ISA/SU | |

Form PCT/ISA/210 (second sheet) (January 1985)